(19) Europäisches Patentamt
European Patent Office
Office européen des brevets

(11) **EP 3 796 599 B1**

(12) **EUROPEAN PATENT SPECIFICATION**

(45) Date of publication and mention
of the grant of the patent:
**04.10.2023 Bulletin 2023/40**

(51) International Patent Classification (IPC):
**G06N 3/045** (2023.01)   **G06N 3/047** (2023.01)
**G06N 3/0895** (2023.01)

(21) Application number: **19823058.3**

(22) Date of filing: **18.06.2019**

(52) Cooperative Patent Classification (CPC):
**G06N 3/045; G06N 3/047; G06N 3/0895**

(86) International application number:
**PCT/JP2019/024167**

(87) International publication number:
**WO 2019/244902 (26.12.2019 Gazette 2019/52)**

(54) **EVALUATION DEVICE AND EVALUATION METHOD**

BEWERTUNGSVORRICHTUNG UND BEWERTUNGSVERFAHREN

DISPOSITIF D'ÉVALUATION ET PROCÉDÉ D'ÉVALUATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2018 JP 2018117456**

(43) Date of publication of application:
**24.03.2021 Bulletin 2021/12**

(73) Proprietor: **NIPPON TELEGRAPH AND TELEPHONE CORPORATION**
**Chiyoda-ku, Tokyo 100-8116, (JP)**

(72) Inventor: **YAMANAKA, Yuki**
**Musashino-shi, Tokyo 180-8585 (JP)**

(74) Representative: **Hoffmann Eitle**
**Patent- und Rechtsanwälte PartmbB**
**Arabellastraße 30**
**81925 München (DE)**

(56) References cited:
- **MALAIYA RITESH K ET AL: "An Empirical Evaluation of Deep Learning for Network Anomaly Detection", 2018 INTERNATIONAL CONFERENCE ON COMPUTING, NETWORKING AND COMMUNICATIONS (ICNC), IEEE, 5 March 2018 (2018-03-05), pages 893-898, XP033361038, DOI: 10.1109/ICCNC.2018.8390278 [retrieved on 2018-06-19]**
- **Masayoshi Shigeta , Hisarnichi Ohtani: "Implementation and evaluation of malware-infected terminal detection system using unsupervised learning", The 2018 Symposium on Cryptography and Information Security (SCIS2018), 26 January 2018 (2018-01-26), pages 1-7, XP009524793,**

**Description**

[Technical Field]

The present invention relates to an evaluation apparatus and an evaluation method.

[Background Art]

Along with the arrival of the era of Internet of Things (IoT), various types of devices (IoT devices) are connected to the Internet and have a multiplicity of uses. In response to this, security measures of the IoT devices such as a traffic session anomaly detection system and an intrusion detection system (IDS) designed for the IoT devices are anticipated.
The aforementioned technology includes, for example, a technology using a probability density estimation device based on unsupervised learning such as a variational auto encoder (VAE). Thus with this technology, after a probability density of normal communication data is learned, communication having a low probability density is detected as abnormal. For this reason, with the technology, it is sufficient when only the normal communication data is recognized, and the anomaly can be detected without learning all abnormal data. Therefore, the technology is effective to detect a threat to the IoT devices which are still in transition where all threat information is not yet fully identified.

[Citation List]

[Non-Patent Literature]

Non-Patent Literature 1: Diederik P Kingma, Max Welling, "Auto-Encoding Variational Bayes", [searched on June 7, 2018], the Internet <URL: https://arxiv.org/abs/1312.6114>
Non-Patent Literature 2: MALAIYA RITESH K ET AL : "An Empirical Evaluation of Deep Learning for Network Anomaly Detection", 2018 INTERNATIONAL CONFERENCE ON COMPUTING, NETWORKING AND COMMUNICATIONS (ICNC), IEEE, 5 March 2018 (2018-03-05), pages 893-898, XP033361038, describes an evaluation of deep learning for network anomaly detection.

[Summary of the Invention]

[Technical Problem]

At this time, since a VAE detects an anomaly based on probability, erroneous detection may occur. For example, the erroneous detection includes excess detection in which normal communication is erroneously determined as abnormal. Data that may be excessively detected includes communication for maintenance that occurs only several times a year and an abnormal amount of traffic data at the time of the Olympic Games. To build a practical anomaly detection system, a function is needed with which, when the occurrence of excess detection is noticed, data of the excess detection is fed back to improve detection precision.
Up to now, to feed back the excess detection data, a technique has been used with which a data set is created by mixing a data set used for initial learning with a data set in which the excess detection occurs, and a model of the VAE is learned again.
However, the technique in the related art has the following two problems. First, as a first problem, a problem occurs that the initial learning data set used for the initial learning needs to be saved even after the model is generated. Then, as a second problem, a problem occurs that, when the amount of excess detection data set is substantially lower than that of initial learning data set, the excess detection data cannot be precisely learned.
In general, the excess detection hardly occurs, and it is difficult in many cases to collect a large amount of excess detection data. For this reason, the second problem among the aforementioned problems is particularly serious. Therefore, the establishment of a technology is demanded with which the feedback is efficiently and precisely performed even when a small amount of excess detection data is used, and evaluation precision can be improved.
The present invention has been made in view of the aforementioned circumstances, and it is an object of the present invention to provide an evaluation apparatus that executes evaluation in a highly precise manner on the presence or absence of an anomaly of communication data and an evaluation method.

[Means for Solving the Problem]

The object of the invention is solved by the subject matter of the independent claims.

[Effects of the Invention]

According to the present invention, the evaluation on the presence or absence of the anomaly of the communication data is executed in a highly precise manner.

[Brief Description of Drawings]

[Fig. 1] Fig. 1 is a drawing illustrating a configuration of an evaluation apparatus according to an embodiment.
[Fig. 2] Fig. 2 is a drawing for describing processing of a model generation unit illustrated in Fig. 1.
[Fig. 3] Fig. 3 is a drawing for describing processing of the model generation unit illustrated in Fig. 1.
[Fig. 4] Fig. 4 is a drawing for describing feedback learning in the evaluation apparatus illustrated in Fig. 1.
[Fig. 5] Fig. 5 is a drawing for describing a model generated by the model generation unit illustrated in Fig. 1.
[Fig. 6] Fig. 6 is a drawing for describing a model generated by the model generation unit illustrated in Fig. 1.
[Fig. 7] Fig. 7 is a drawing for describing processing of the evaluation apparatus illustrated in Fig. 1.
[Fig. 8] Fig. 8 is a flow chart illustrating a processing procedure of learning processing performed in an initial stage by the evaluation apparatus illustrated in Fig. 1.
[Fig. 9] Fig. 9 is a flow chart illustrating a processing procedure of evaluation processing performed by the evaluation apparatus 1 illustrated in Fig. 1.
[Fig. 10] Fig. 10 is a drawing for describing an application example of the evaluation apparatus according to the embodiment.
[Fig. 11] Fig. 11 is a drawing for describing another example of processing of an evaluation unit illustrated in Fig. 1.
[Fig. 12] Fig. 12 is a drawing for describing feedback learning of an evaluation method in a related art.
[Fig. 13] Fig. 13 is a drawing for describing a model used in the evaluation method in the related art.
[Fig. 14] Fig. 14 is a drawing for describing a model used in the evaluation method in the related art.
[Fig. 15] Fig. 15 illustrates an example of a computer with which the evaluation apparatus is realized when a program is executed.

[Description of Embodiments]

Hereinafter, an embodiment of the present invention will be described in detail with reference to the drawings. It is noted that the present invention is not intended to be limited by this embodiment. In addition, the same parts are assigned with the same reference signs in the description of the drawings.

[Embodiment]

An embodiment of the present invention will be described. An evaluation apparatus according to the embodiment generates an excess detection VAE model in which only excess detection data is learned in addition to a learning data VAE model in which normal learning data is learned. The excess detection data is normal communication data evaluated as abnormal in a course of evaluation processing, and only a small amount thereof is generated. In the evaluation apparatus according to the present embodiment, since an evaluation is performed based on a probability density obtained by concatenating the two generated VAE models with each other at a model level, the feedback of the excess detection data and the increase of the detection precision are realized.

It is noted that when an input of a certain data point $x_i$ is accepted, the VAE outputs an anomaly score (abnormality degree) corresponding to the data. When an estimated value of the probability density is set as $p(x_i)$, the anomaly score becomes an approximate value of $-\log p(x_i)$. Therefore, it is indicated that as the anomaly score output by the VAE is higher, the abnormality degree of this communication data is higher.

[Configuration of the evaluation apparatus]

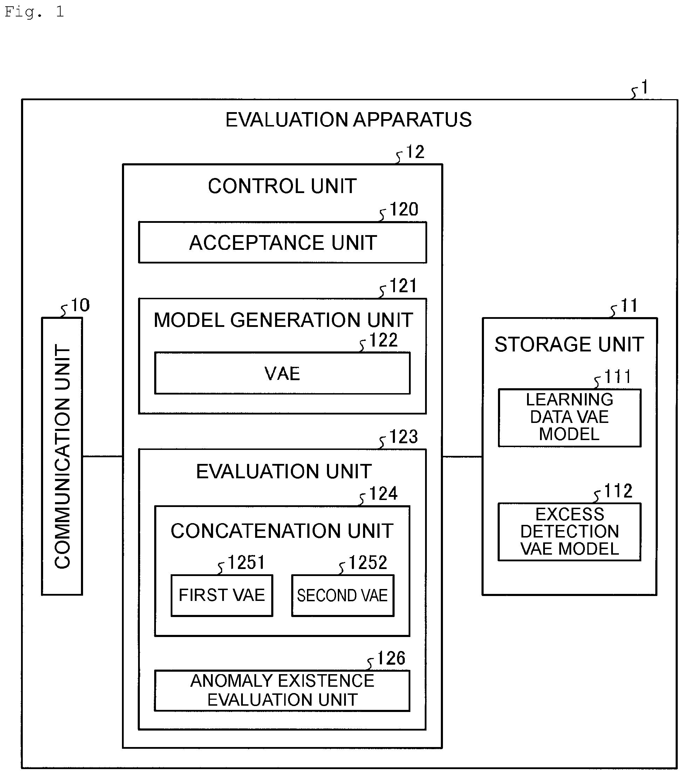

In view of the above, a configuration of the evaluation apparatus according to the embodiment will be specifically described. Fig. 1 is a drawing illustrating a configuration of the evaluation apparatus according to the embodiment. As illustrated in Fig. 1, an evaluation apparatus 1 includes a communication unit 10, a storage unit 11, and a control unit 12.

The communication unit 10 is a communication interface that transmits and receives various types of information to and from another apparatus connected via a network or the like. The communication unit 10 is realized by a network interface card (NIC) or the like, and communication is performed between another apparatus via a telecommunications line such as a local area network (LAN) or the Internet and the control unit 12 (described below). The communication unit 10 is connected to an external apparatus via the network or the like and accepts an input of communication data of an evaluation target.

The storage unit 11 is realized by a random access memory (RAM), a semiconductor memory element such as a flash memory, or a storage device such as a hard disc or an optical disc, and stores a processing program for causing the evaluation apparatus 1 to operate, data used during the execution of the processing program, and the like. The storage unit 11 has a learning data VAE model 111 and an excess detection VAE model 112.

The learning data VAE model 111 is a learning data VAE model (first model) in which normal learning data is learned, and is a model in which a feature of the probability density of the normal initial learning data is learned. The excess detection VAE model 112 is an excess detection VAE model (second model) in which only the excess detection data is learned, and is a model in which a feature of the probability density of the normal excess detection data evaluated as abnormal in the course of the evaluation processing is learned. Each of the models has model parameter of the learned VAE.

The control unit 12 includes an internal memory that stores programs that defines various types of processing procedures and the like and necessary data, and various types of processing are executed by these. For example, the control unit 12 is an electronic circuit such as a central processing unit (CPU) or a micro processing unit (MPU). The control unit 12 includes an acceptance unit 120, a model generation unit 121 (generation unit), and an evaluation unit 123.

The model generation unit 121 includes a VAE 122 as a probability density estimation device. The model generation unit 121 learns input data, and generates a VAE model or updates VAE model parameter. The model generation unit 121 stores model parameter of the generated VAE model or the updated model parameter of the VAE model in the storage unit 11.

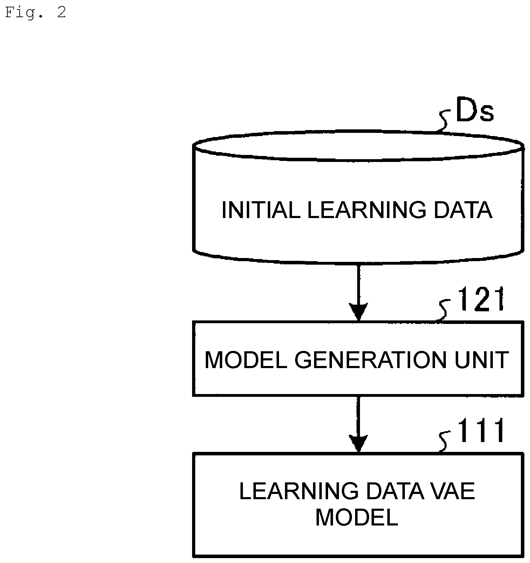

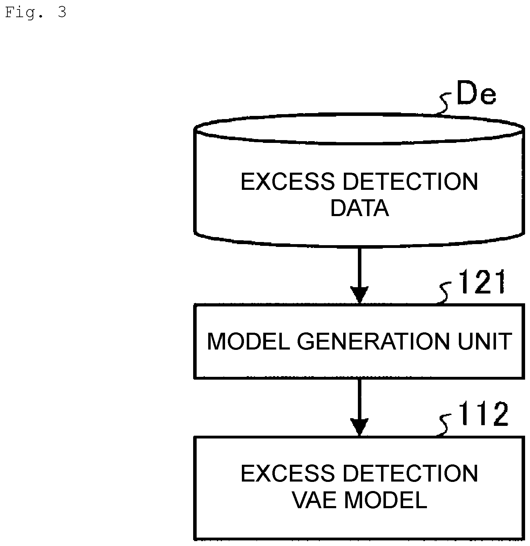

Fig. 2 and Fig. 3 are drawings for describing processing of the model generation unit 121 illustrated in Fig. 1. First, as illustrated in Fig. 2, the model generation unit 121 learns a large amount of normal learning data Ds (for example, HTTP communication) as initial learning data in an initial stage, and generates the learning data VAE model 111.

Then, as illustrated in Fig. 3, the model generation unit 121 learns a small amount of excess detection data De collected in the course of the evaluation processing (for example, FTP communication), and newly generates the excess detection VAE model 112. Alternatively, the model generation unit 121 learns the fed-back excess detection data.

At this time, when a learning instruction of the excess detection data is received, the model generation unit 121 learns the input excess detection data, and generates the excess detection VAE model 112 or updates the parameter of the excess detection VAE model 112. Thus, the excess detection data is fed back to the evaluation apparatus 1.

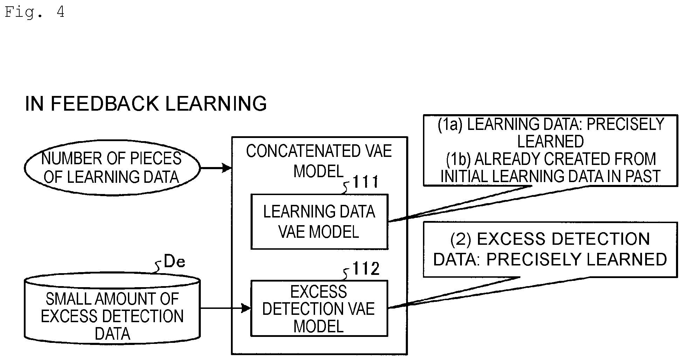

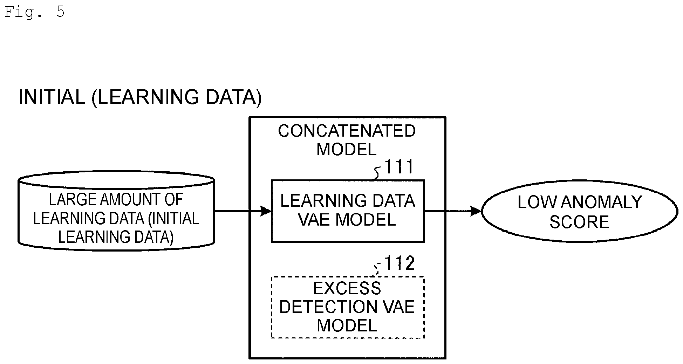

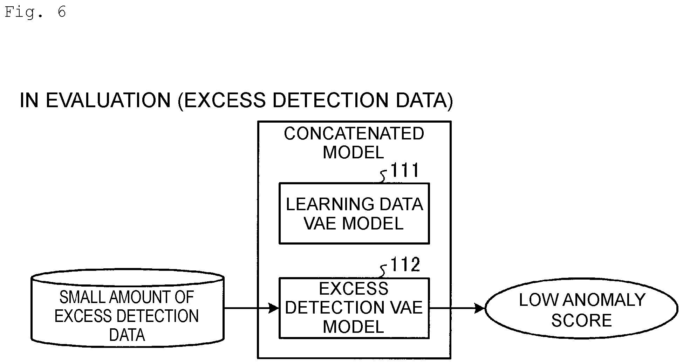

Fig. 4 is a drawing for describing feedback learning of the evaluation apparatus illustrated in Fig. 1. Fig. 5 and Fig. 6 are drawings for describing the model generated by the model generation unit 121 illustrated in Fig. 1. Specifically, as illustrated in Fig. 4, at the time of the feedback learning of the excess detection data, the model generation unit 121 precisely learns the excess detection data De by using the number of pieces of the initial learning data Ds and the small amount of fed-back excess detection data De. Then, the model generation unit 121 generates the excess detection VAE model 112 or updates the model parameter of the excess detection VAE model 112.

Therefore, it is sufficient when the evaluation apparatus 1 saves only the number of pieces of the initial learning data Ds for the feedback learning of the excess detection data. In addition, since only the small amount of excess detection data is learned, the evaluation apparatus 1 can shorten a learning time as compared with a case where the large amount of initial learning data is learned. In addition, since only the excess detection data is learned, the evaluation apparatus 1 can execute the precise learning.

Then, the learning data VAE model 111 is a model in which the normal learning data is precisely learned in the initial stage (see (1a) in Fig. 4), and is a model already created from the initial learning data Ds in the past (see (1b) in Fig. 4). This learning data VAE model 111 indicates a low anomaly score to the normal communication data at the normal time (see Fig. 5). Then, the excess detection VAE model 112 is a model in which the excess detection data is precisely learned, and indicates a low anomaly score to the excess detection data (see Fig. 6).

The evaluation unit 123 estimates the probability density of the communication data of the evaluation target by using the learning data VAE model 111 and the excess detection VAE model 112, and evaluates the presence or absence of the anomaly of the communication data of the evaluation target based on the estimated probability density. The evaluation unit 123 evaluates the presence or absence of the anomaly of the communication data of the evaluation target based on the probability density obtained by concatenating the following two probability densities with each other. The first probability density is the probability density estimated by applying the learning data VAE model 111. The second probability density is the probability density estimated by applying the excess detection VAE model 112. The evaluation unit 123 detects that the communication data of the evaluation target is abnormal in a case where the concatenated probability density is lower than a predetermined value, and notifies an external response apparatus or the like of the occurrence of the anomaly of the communication data. The evaluation unit 123 includes a concatenation unit 124 and an anomaly existence evaluation unit 126.

The concatenation unit 124 has the following two VAEs. The first VAE is a first VAE 1251 to which model parameter of the learning data VAE model 111 is applied. The second VAE is a second VAE 1252 to which model parameter of the excess detection VAE model 112 is applied. The concatenation unit 124 concatenates the following two probability densities with each other. The first probability density is the probability density estimated by applying the learning data VAE model 111. The second probability density is the probability density estimated by applying the excess detection VAE model 112.

In a case where the excess detection VAE model 112 is generated or updated by the feedback of the excess detection data, the concatenation unit 124 concatenates the excess detection VAE model 112 with the learning data VAE model 111 at the model level. The concatenation at the model level indicates that scores corresponding to the outputs of the respective VAE models are concatenated with each other based on the following Formula (1). In other words, the concatenation unit 124 applies the following two anomaly scores to Formula (1) and calculates a concatenated anomaly score. The first anomaly score is the anomaly score estimated by the first VAE 1251 by applying the learning data VAE model 111. The second anomaly score is the anomaly score estimated by the second VAE 1252 by applying the excess detection VAE model 112.

[Formula 1]

$$\mathrm{score}_{\mathrm{concat}} = \log\left( \frac{N_n}{N_n + N_{od}} e^{-\mathrm{score}_n} + \frac{N_{od}}{N_n + N_{od}} e^{-\mathrm{score}_{od}} \right)$$

$$\cdots (1)$$

In Formula (1), $\mathrm{score}_n$ denotes an anomaly score output by the first VAE 1251 applying the learning data VAE model 111 in which the initial learning data Ds is learned. $\mathrm{score}_{od}$ denotes an anomaly score output by the second VAE 1252 applying the excess detection VAE model 112 in which the excess detection data De is learned. $\mathrm{score}_{\mathrm{concat}}$ denotes a concatenated anomaly score. In addition, $N_n$ denotes the number of pieces of learning data. $N_{od}$ denotes the number of pieces of excess detection data.

The anomaly existence evaluation unit 126 evaluates the presence or absence of the anomaly of the communication data of the evaluation target based on the probability density concatenated by the concatenation unit 124. The anomaly existence evaluation unit 126 detects the presence or absence of the anomaly of the communication data of the evaluation target based on the concatenated anomaly score calculated by the concatenation unit 124. Specifically, in a case where the concatenated anomaly score is higher than a predetermined value, the anomaly existence evaluation unit 126 evaluates the communication data of the evaluation target as abnormal. On the other hand, in a case where the concatenated anomaly score is equal to or lower than the predetermined value, the anomaly existence evaluation unit 126 evaluates the communication data of the evaluation target as normal.

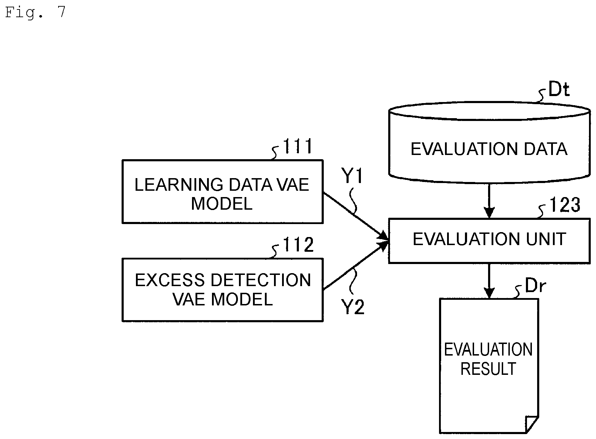

Fig. 7 is a drawing for describing processing of the evaluation unit 123 illustrated in Fig. 1. The evaluation unit 123 receives the learned learning data VAE model 111 and the excess detection VAE model 112 as inputs (see arrows Y1 and Y2), and evaluates evaluation communication data (evaluation data) Dt obtained from the network. At this time, the evaluation unit 123 obtains the concatenated anomaly score by applying the following two anomaly scores to Formula (1). The first anomaly score is the anomaly score output by the first VAE 1251 to the evaluation data Dt, and the second anomaly score is the anomaly score output by the second VAE 1252 to the evaluation data Dt. Then, in a case where the concatenated anomaly score is higher than the predetermined value, the evaluation unit 123 evaluates the communication data of the evaluation target as abnormal, and outputs an evaluation result Dr thereof to the response apparatus or the like.

[Initial learning processing]

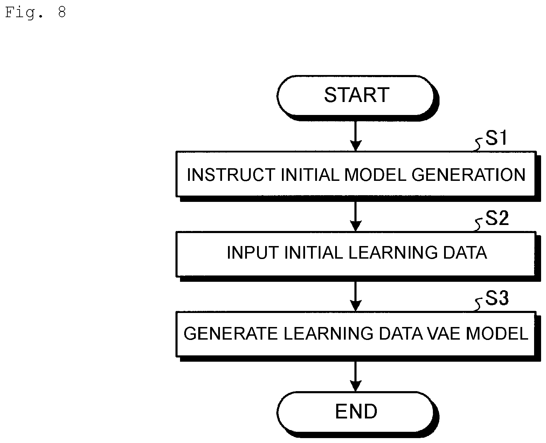

Next, learning processing performed in an initial stage by the evaluation apparatus 1 will be described. Fig. 8 is a flow chart illustrating a processing procedure of the learning processing performed in the initial stage by the evaluation apparatus 1 illustrated in Fig. 1.

As illustrated in Fig. 8, in an initial stage, when a generation instruction of the learning data VAE model 111 corresponding to an initial mode is received (step S1), the model generation unit 121 accepts an input of the initial learning data (step S2). Then, the model generation unit 121 learns this initial learning data and generates the learning data VAE model 111 (step S3). The model generation unit 121 stores the model parameter of the generated learning data VAE model 111 in the storage unit 11.

[Evaluation processing]

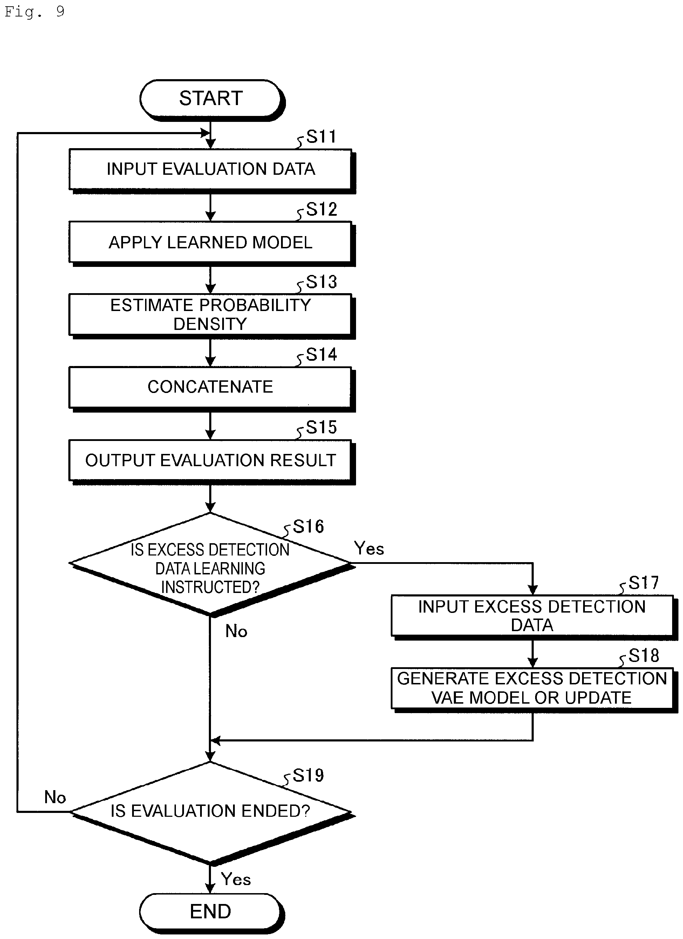

Next, evaluation processing of the evaluation apparatus 1 will be described. Fig. 9 is a flow chart illustrating a processing procedure of the evaluation processing performed by the evaluation apparatus 1 illustrated in Fig. 1.

As illustrated in Fig. 9, when the acceptance unit 120 accepts an input of the evaluation data (step S11), the evaluation unit 123 applies the learned model (step S12), and estimates the probability density of the evaluation target data (step S13).

At this time, before the excess detection data is fed back, the storage unit 11 stores only the learning data VAE model 111. In this case, the evaluation unit 123 applies the learning data VAE model 111 to the first VAE and estimates the probability density of the evaluation data. In addition, in a case where the excess detection data is already fed back, the storage unit 11 stores both the learning data VAE model 111 and the excess detection VAE model 112. In this case, the evaluation unit 123 applies the learning data VAE model 111 to the first VAE 1251 and applies the excess detection VAE model 112 to the second VAE 1252, and estimates the probability density of the evaluation data in each of the VAEs.

Subsequently, the evaluation unit 123 calculates the probability density obtained by concatenating the two probability densities with each other (step S14). The first probability density is the probability density estimated by applying the learning data VAE model 111, and the second probability density is the probability density estimated by applying the excess detection VAE model 112. Specifically, in the evaluation unit 123, the following two anomaly scores are applied to Formula (1), and the concatenated anomaly score is calculated. The first anomaly score is the anomaly score estimated by the first VAE 1251 in which the concatenation unit 124 applies the learning data VAE model 111, and the second anomaly score is the anomaly score estimated by the second VAE 1252 by applying the excess detection VAE model 112.

Then, in the evaluation unit 123, the anomaly existence evaluation unit 126 evaluates the presence or absence of the anomaly of the communication data of the evaluation target based on the probability density calculated in step S14, and outputs the evaluation result (step S15). In a case where the concatenated anomaly score calculated by the concatenation unit 124 is higher than the predetermined value, the anomaly existence evaluation unit 126 evaluates the communication data of the evaluation target as abnormal.

Subsequently, the control unit 12 determines whether or not the excess detection data learning instruction is received (step S16). For example, an administrator analyzes a detection result output from the evaluation unit 123, and in a case where communication data that is detected as abnormal but is actually normal exists, classifies this communication data as the excess detection data. Then, when a predetermined number of excess detection data is collected, the administrator feeds back the collected excess detection data to the evaluation apparatus 1 to instruct to learn this excess detection data. Alternatively, in the external apparatus, the detection result output from the evaluation unit 123 is analyzed and classified as the excess detection data. Then, when a predetermined number of classified communication data is collected, the excess detection data of the learning target is fed back from the external apparatus, and also the learning instruction of the excess detection data is input.

In a case where the control unit 12 determines that the learning instruction of the excess detection data is received (step S16: Yes), the acceptance unit 120 accepts an input of the excess detection data of the learning target (step S17). Subsequently, the model generation unit 121 learns the input excess detection data and newly generates the excess detection VAE model 112 (step S18). Alternatively, the model generation unit 121 learns the fed-back excess detection data and updates the model parameter of the excess detection VAE model 112 (step S18).

In a case where it is determined that the excess detection data learning instruction is not received (step S16: No) or after the processing in step S18 is ended, the control unit 12 determines whether or not an end instruction of the evaluation processing is received (step S19). In a case where it is determined that the end instruction of the evaluation processing is not received (step S19: No), the control unit 12 returns to step S11 and accepts the next input of the evaluation data. In a case where it is determined that the end instruction of the evaluation processing is received (step S19: Yes), the control unit 12 ends the evaluation processing.

[Example]

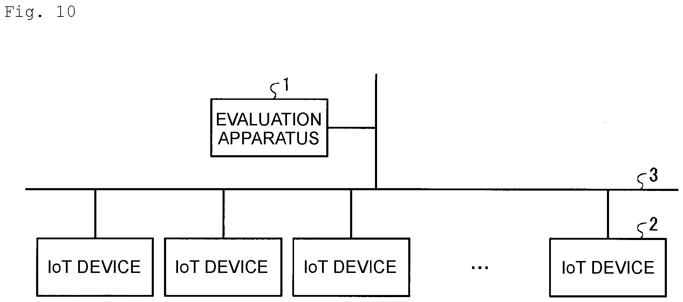

The evaluation apparatus 1 according to the present embodiment can be applied to the anomaly detection of the IoT device. Fig. 10 is a drawing for describing an application example of the evaluation apparatus 1 according to the embodiment. As illustrated in Fig. 10, the evaluation apparatus 1 is disposed on a network 3 to which a plurality of IoT devices 2 are connected. In this case, the evaluation apparatus 1 collects traffic session information transmitted and received by the IoT devices 2, and learns a probability density of a normal traffic session and detects an abnormal traffic session.

In the evaluation apparatus 1, the model generation unit 121 receives an initial learning data set and an excess detection data set which are set as learning targets, and stores learned models obtaining by learning the received data sets in the storage unit 11.

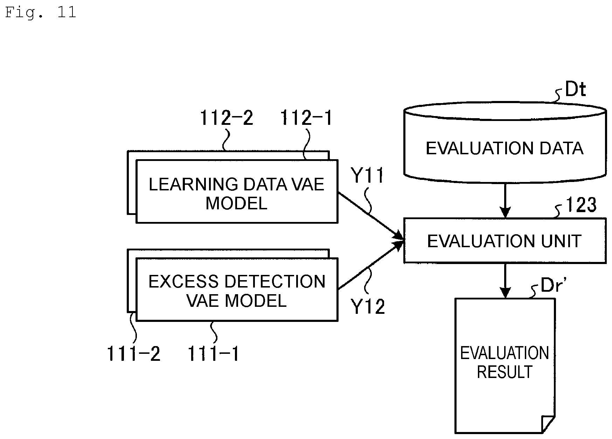

Fig. 11 is a drawing for describing another example of the processing of the evaluation unit 123 illustrated in Fig. 1. In the evaluation unit 123, the concatenation unit 124 receives model parameter of one or more of learned models, and concatenates anomaly scores with each other which are estimated by the respective VAEs applying the respective learned models. The VAE of the concatenation unit 124 has a function of outputting an estimation result corresponding to each of the input evaluation data. In Fig. 1, a configuration in which the concatenation unit 124 has the two VAEs has been described as an example but is not limited to this. A configuration may also be adopted where the concatenation unit 124 has the same number of VAEs as the number of applied models. Alternatively, the concatenation unit 124 may also sequentially apply the learned models to the single VAE, and obtain each of the anomaly scores estimated by using the respective learned models.

At this time, the learned model to be applied to the concatenation unit 124 may also be the learning data VAE model 111 in which the initial learning data is learned, or may also be the excess detection VAE model 112 in which the excess detection data is learned. In addition, the plurality of learning data VAE models 111-1 and 111-2 in which the mutually different pieces of learning data are learned may also be applied to the concatenation unit 124 (see an arrow Y11). Of course, only the single learning data VAE model may also be applied to the concatenation unit 124.

Then, a plurality of excess detection VAE models 112-1 and 112-2 in which mutually different pieces of excess detection data are learned may also be applied to the concatenation unit 124 (see an arrow Y12). Of course, since the excess detection VAE model is not generated before the excess detection data is fed back, a configuration may also be adopted where the excess detection VAE model is not applied to the concatenation unit 124. In addition, as described above, only the single excess detection VAE model may also be applied to the concatenation unit 124.

In a case where a plurality of models are applied, the concatenation unit 124 concatenates the anomaly scores by the plurality of applied models with each other based on the following Formula (2).
[Formula 2]

$$\mathrm{score}_{\mathrm{concat}} = \log\left( \sum_k \frac{N_k}{\Sigma_{k'}N_{k'}} e^{-\mathrm{score}_k} \right) \quad \cdots (2)$$

Where $\mathrm{score}_k$ denotes a score output by the k-th model, and $N_k$ denotes the number of pieces of data learned by the k-th model. In other words, when the anomaly existence evaluation unit 126 performs the evaluation with regard to the evaluation data, a value of Formula (2) is obtained as the concatenated anomaly score. In this manner, the concatenation unit 124 can also concatenate two or more models at the model level with one another.

As described above, at the time of the initial learning, the evaluation apparatus 1 inputs the initial learning data to the model generation unit 121 and obtains the learning data VAE model 111. Then, in the course of the evaluation processing, until some excess detections are discovered, the evaluation apparatus 1 inputs only the learning data VAE model 111 to the concatenation unit 124, and continues subsequently evaluating the traffic information obtained from the network.

Then, in a case where the excess detection is discovered, the evaluation apparatus 1 inputs the data set of the excess detection data to the model generation unit 121, and generates the excess detection VAE model 112 in which the excess detection data is learned. Thereafter, the evaluation apparatus 1 inputs the learning data VAE model 111 and the excess detection VAE model 112 to the concatenation unit 124, and continues sequentially evaluating the traffic information similarly obtained from the network.

The evaluation apparatus 1 sequentially repeats these processes of the excess detection discovery, the excess detection data learning, and the model concatenation, and continues improving the detection precision.

[Method in the related art]

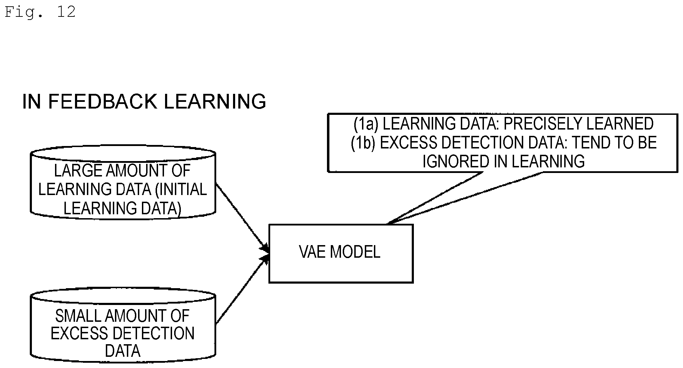

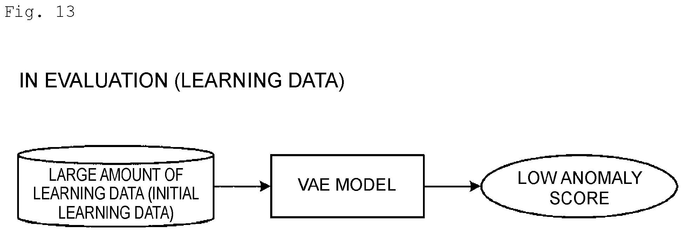

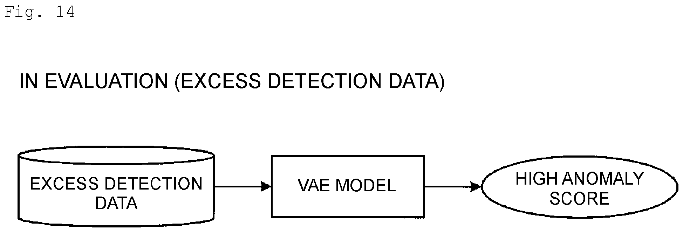

Next, the evaluation method in the related art will be described. Fig. 12 is a drawing for describing the feedback learning based on the evaluation method in the related art. Fig. 13 and Fig. 14 are drawings for describing a model used in the evaluation method in the related art.

As illustrated in Fig. 12, according to the evaluation method in the related art, at the time of the feedback learning of the excess detection data, both the small amount of fed-back excess detection data and the large amount of initial learning data are learned. As a result, according to the evaluation method in the related art, the large amount of initial learning data can be precisely learned in the VAE model (see (1a) in Fig. 12), but the learning is performed while the small amount of excess detection data is ignored (see (1b) in Fig. 12).

Therefore, the VAE model in the related art indicates a low anomaly score to the communication data equivalent to the large amount of learning data at the time of the evaluation (see Fig. 13) but still indicates a high anomaly score to the excess detection data (see Fig. 14). In this manner, according to the evaluation method in the related art, since the numbers of data are biased, the excess detection data cannot be precisely learned. Furthermore, according to the evaluation method in the related art, the large amount of initial learning data needs to be saved for the feedback learning of the excess detection data, and a time equal to or longer than the time for the initial learning is needed to newly generate the VAE model again.

[Evaluation experiment]

In view of the above, results are illustrated by respectively performing the evaluations on the traffic session data between actual IoT devices by using the evaluation method in the related art and the evaluation method according to the present embodiment. The learning data corresponds to camera communication (369 pieces of data), and the excess detection data corresponds to SSH communication (10 pieces of data).

As the initial learning, an evaluation result in a case where the VAE model is generated by learning the camera communication will be described. That is, this is the result when the evaluation is performed by using the VAE model in which only the camera communication corresponding to the initial learning data is learned before the feedback of the excess detection data. In this case, an average score of the learning data was -25.2625. Since the excess detection data was not learned, an average score of the excess detection data was a high score at 268.530. Then, the time spent for the learning was 13.452 (sec).

Subsequently, the evaluation result after the feedback learning of the excess detection data is performed by using the evaluation method in the related art will be described. In this case, the average score of the learning data was -16.3808. The average score of the excess detection data still indicated a high score at 44.6441 although some improvement was attained as compared with the case before the feedback of the excess detection data, and the precision remained low. Then, the time spent for the relearning was 14.157(sec), and was longer than the time spent for the initial learning.

In contrast to this, the evaluation result after the feedback learning of the excess detection data is performed by using the evaluation method according to the present embodiment will be described. In this case, the average score of the learning data was -25.2625. Then, the average score of the excess detection data was substantially improved at -24.0182 as compared with the evaluation method in the related art. Furthermore, the time spent for the relearning was substantially shortened at 3.937 (sec) as compared with the evaluation method in the related art.

[Advantages of the embodiment]

In this manner, according to the present embodiment, the probability density of the evaluation data is estimated by using the learning data VAE model in which the normal learning data is learned and the excess detection VAE model in which the excess detection data is learned, and the presence or absence of the anomaly of the evaluation data is evaluated based on the estimated probability density. That is, according to the present embodiment, to be separated from the learning data VAE model in which the normal learning data is learned, the excess detection VAE model in which the feedback learning of only the excess detection data is performed is generated, and the evaluation is performed based on the probability density obtained when the probability densities estimated by the two generated VAE models are concatenated with each other.

According to the evaluation method in the related art, the excess detection data cannot be precisely learned, also the large amount of initial learning data needs to be saved for the feedback learning of the excess detection data, and the time equal to or longer than the time for the initial learning is needed to newly generate the VAE model again.

In contrast to this, in the evaluation apparatus 1 according to the present embodiment, only the number of pieces of the initial learning data Ds may be saved for the feedback learning of the excess detection data. Then, in the evaluation apparatus 1, as also illustrated in the evaluation experiment results as described above, only the small amount of excess detection data may be learned in the course of the evaluation processing, and the learning time can be substantially shortened as compared with the learning of the large amount of initial learning data. In addition, in the evaluation apparatus 1, as also illustrated in the evaluation experiment results as described above, even when the number of pieces of excess detection data and the number of pieces of learning data are biased, the excess detection data can be evaluated in a highly precise manner.

Therefore, according to the present embodiment, the small amount of excess detection data is efficiently fed back to reduce the generation of the excess detection data, and it is possible to execute the evaluation in a highly precise manner on the presence or absence of the anomaly of the communication data.

[System configuration and the like]

The respective components of the respective apparatuses illustrated in the drawings are like function conceptions, and are not necessarily required to be physically configured as illustrated in the drawings. That is, specific aspects of the distribution and integration of the respective apparatuses are not limited to the aspects illustrated in the drawings, and all or a part of the apparatuses can be configured by being functionally or physically distributed and integrated in any units in accordance with various types of loads, use situations, and the like. Furthermore, all or a part of the respective processing functions performed in the respective apparatuses may be realized by a CPU and programs analyzed and executed by the CPU, or may be realized as hardware based on wired logic.

In addition, , the information including the processing procedures, control procedures, specific names, and various types of data and parameter illustrated in the document and drawings described above can be modified within the scope of the claims.

[Program]

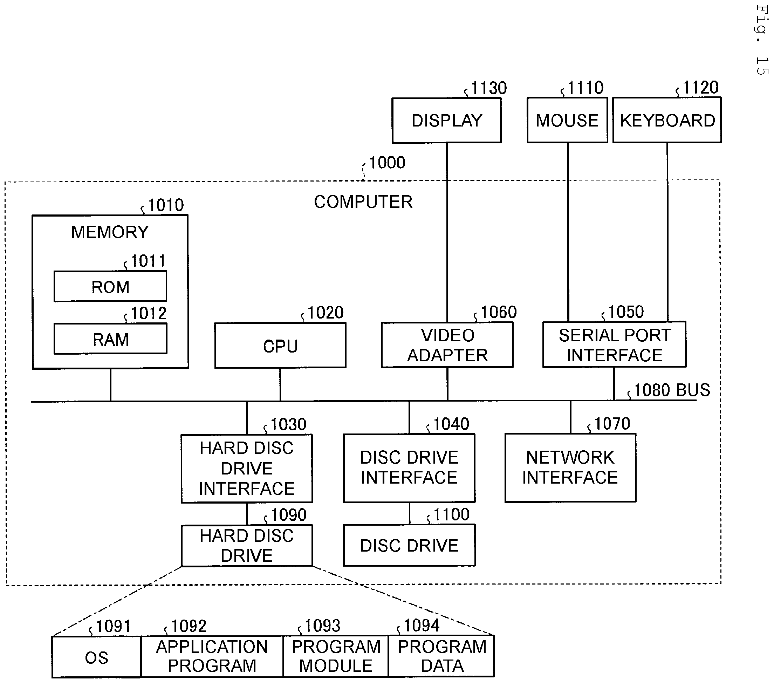

Fig. 15 illustrates an example of a computer with which the evaluation apparatus 1 is realized when a program is executed. A computer 1000 includes, for example, a memory 1010 and a CPU 1020. In addition, the computer 1000 includes a hard disc drive interface 1030, a disc drive interface 1040, a serial port interface 1050, a video adapter 1060, and a network interface 1070. These respective units are connected to one another by a bus 1080.

The memory 1010 includes a read only memory (ROM) 1011 and a RAM 1012. The ROM 1011 stores, for example, a boot program such as a basic input output system (BIOS). The hard disc drive interface 1030 is connected to a hard disc drive 1090. The disc drive interface 1040 is connected to a disc drive 1100. For example, a detachable storage medium such as a magnetic disc or an optical disc is inserted to the disc drive 1100. The serial port interface 1050 is connected, for example, to a mouse 1110 and a keyboard 1120. The video adapter 1060 is connected, for example, to a display 1130.

The hard disc drive 1090 stores, for example, an operating system (OS) 1091, an application program 1092, a program module 1093, and program data 1094. That is, programs that define the respective processes of the evaluation apparatus 1 are implemented as the program module 1093 in which codes that can be executed by a computer are described. The program module 1093 is stored, for example, in the hard disc drive 1090. For example, the program module 1093 configured to execute the processing similar to the functional configuration in the evaluation apparatus 1 is stored in the hard disc drive 1090. It is noted that the hard disc drive 1090 may also be substituted by a solid state drive (SSD).

In addition, setting data used in the processing according to the aforementioned embodiment is stored as the program data 1094 in the memory 1010 or the hard disc drive 1090, for example. Then, the CPU 1020 appropriately reads out the program module 1093 or the program data 1094 stored in the memory 1010 or the hard disc drive 1090 onto the RAM 1012 for execution.

It is noted that the program module 1093 and the program data 1094 are not only stored in the hard disc drive 1090, but may also be stored in a detachable storage medium and read out by the CPU 1020 via the disc drive 1100 or the like, for example. Alternatively, the program module 1093 and the program data 1094 may also be stored in another computer connected via a network (a LAN, a wide area network (WAN), or the like). Then, the program module 1093 and the program data 1094 may be read out from the other computer by the CPU 1020 via the network interface 1070.

The embodiment to which the invention made by the inventor of the present invention is applied has been described above, but the present invention is not intended to be limited by the embodiment.

[Reference Signs List]

| | |
|---|---|
| 1 | Evaluation apparatus |
| 2 | IoT device |
| 3 | Network |
| 10 | Communication unit |
| 11 | Storage unit |
| 12 | Control unit |
| 111 | Leaning data VAE model |
| 112 | Excess detection VAE model |
| 120 | Acceptance unit |
| 121 | Model generation unit |
| 122 | VAE |
| 123 | Evaluation unit |
| 124 | Concatenation unit |

1251     First VAE
1252     Second VAE
126      Anomaly existence evaluation unit

**Claims**

**1.**  An evaluation apparatus (1) comprising:

an acceptance unit (120) configured to accept an input of communication data of a traffic session between Internet of Things (IoT) devices; and
an evaluation unit (123) configured to estimate a probability density of the input of communication data by combining a first probability density estimated by applying a first variational auto encoder model (111) in which normal initial learning data has been learned and a second probability density estimated by applying a second variational auto encoder model (112) in which normal excess detection data has been learned, wherein normal excess detection data is normal communication data that has been previously detected as abnormal in a course of evaluation processing, and to evaluate whether the input of communication data is normal or abnormal based on the estimated probability density of the input of communication data.

**2.**  An evaluation method executed by an evaluation apparatus (1), comprising:

a step of accepting an input of communication data of a traffic session between Internet of Things (IoT) devices; and
a step of estimating a probability density of the input of communication data by combining a first probability density estimated by applying a first variational auto encoder model (111) in which normal initial learning data has been learned and a second probability density estimated by applying a second variational auto encoder model (112) in which normal excess detection data has been learned, wherein normal excess detection data is normal communication data that has been previously detected as abnormal in a course of evaluation processing, and to evaluate whether the input of communication data is normal or abnormal based on the estimated probability density of the input of communication data.

**Patentansprüche**

**1.**  Bewertungsvorrichtung (1), umfassend:

eine Annahmeeinheit (120), die konfiguriert ist, um eine Eingabe von Kommunikationsdaten einer Datenverkehrssitzung zwischen Internet der Dinge (IoT)-Vorrichtungen anzunehmen; und
eine Bewertungseinheit (123), die konfiguriert ist zum Schätzen einer Wahrscheinlichkeitsdichte der Eingabe von Kommunikationsdaten durch Kombinieren einer ersten Wahrscheinlichkeitsdichte, die geschätzt ist durch Anwenden eines ersten Variations-Autocodierermodells (111), in welchem normale initiale Lerndaten erlernt worden sind, und einer zweiten Wahrscheinlichkeitsdichte, die geschätzt ist durch Anwenden eines zweiten Variations-Autocodierermodells (112), in welchem normale Überschusserfassungsdaten erlernt worden sind, wobei normale Überschusserfassungsdaten normale Kommunikationsdaten sind, die zuvor in einem Verlauf der Bewertungsverarbeitung als abnormal erkannt worden sind, und zum Bewerten, ob die Eingabe von Kommunikationsdaten normal oder abnormal ist, basierend auf der geschätzten Wahrscheinlichkeitsdichte der Eingabe von Kommunikationsdaten.

**2.**  Bewertungsverfahren, ausgeführt von einer Bewertungsvorrichtung (1), umfassend:

einen Schritt des Annehmens einer Eingabe von Kommunikationsdaten einer Datenverkehrssitzung zwischen Internet der Dinge (IoT) Vorrichtungen; und
einen Schritt des Schätzens einer Wahrscheinlichkeitsdichte der Eingabe von Kommunikationsdaten durch Kombinieren einer ersten Wahrscheinlichkeitsdichte, die geschätzt wird durch Anwenden eines ersten Variations-Autocodierermodells (111), in welchem normale initiale Lerndaten erlernt worden sind, und einer zweiten Wahrscheinlichkeitsdichte, die geschätzt wird durch Anwenden eines zweiten Variations-Autocodierermodells (112), in welchem normale Überschusserfassungsdaten erlernt worden sind, wobei normale Überschusserfassungsdaten normale Kommunikationsdaten sind, die zuvor in einem Verlauf der Bewertungsverarbeitung als abnormal erfasst worden sind, und um zu bewerten, ob die Eingabe von Kommunikationsdaten normal oder abnormal ist, basierend auf der geschätzten Wahrscheinlichkeitsdichte der Eingabe von Kommunikationsdaten.

**Revendications**

1. Appareil (1) d'évaluation comprenant :

   une unité (120) d'acceptation configurée pour accepter une entrée de données de communication d'une session de trafic entre des dispositifs de l'Internet des objets (IoT) ; et
   une unité (123) d'évaluation configurée pour estimer une densité de probabilité de l'entrée de données de communication en combinant une première densité de probabilité estimée par l'application d'un premier modèle (111) d'auto-encodeur variationnel dans lequel des données d'apprentissage initiales normales ont été apprises et une seconde densité de probabilité estimée par l'application d'un second modèle (112) d'auto-encodeur variationnel dans lequel des données de détection d'excès normales ont été apprises, dans lequel des données de détection d'excès normales sont des données de communication normales qui ont été précédemment détectées comme anormales au cours d'un traitement d'évaluation, et pour évaluer si l'entrée de données de communication est normale ou anormale sur la base de la densité de probabilité estimée de l'entrée de données de communication.

2. Procédé d'évaluation exécuté par un appareil (1) d'évaluation, comprenant :

   une étape consistant à accepter une entrée de données de communication d'une session de trafic entre des dispositifs de l'Internet des objets (IoT) ; et
   une étape consistant à estimer une densité de probabilité de l'entrée de données de communication en combinant une première densité de probabilité estimée par l'application d'un premier modèle (111) d'auto-encodeur variationnel dans lequel des données d'apprentissage initiales normales ont été apprises et une seconde densité de probabilité estimée par l'application d'un second modèle (112) d'auto-encodeur variationnel dans lequel des données de détection d'excès normales ont été apprises, dans lequel des données de détection d'excès normales sont des données de communication normales qui ont été précédemment détectées comme anormales au cours d'un traitement d'évaluation, et à évaluer si l'entrée de données de communication est normale ou anormale sur la base de la densité de probabilité estimée de l'entrée de données de communication.

Fig. 1

EVALUATION APPARATUS ⌇1

CONTROL UNIT ⌇12

ACCEPTANCE UNIT ⌇120

MODEL GENERATION UNIT ⌇121

VAE ⌇122

EVALUATION UNIT ⌇123

CONCATENATION UNIT ⌇124

FIRST VAE ⌇1251

SECOND VAE ⌇1252

ANOMALY EXISTENCE EVALUATION UNIT ⌇126

COMMUNICATION UNIT ⌇10

STORAGE UNIT ⌇11

LEARNING DATA VAE MODEL ⌇111

EXCESS DETECTION VAE MODEL ⌇112

Fig. 2

INITIAL LEARNING DATA

Ds

MODEL GENERATION UNIT

121

LEARNING DATA VAE
MODEL

111

Fig. 3

De

EXCESS DETECTION
DATA

121

MODEL GENERATION UNIT

112

EXCESS DETECTION
VAE MODEL

Fig. 4

IN FEEDBACK LEARNING

NUMBER OF PIECES OF LEARNING DATA

CONCATENATED VAE MODEL
111

LEARNING DATA VAE MODEL

De

SMALL AMOUNT OF EXCESS DETECTION DATA

112

EXCESS DETECTION VAE MODEL

(1a) LEARNING DATA: PRECISELY LEARNED
(1b) ALREADY CREATED FROM INITIAL LEARNING DATA IN PAST

(2) EXCESS DETECTION DATA: PRECISELY LEARNED

Fig. 5

INITIAL (LEARNING DATA)

CONCATENATED MODEL

LARGE AMOUNT OF LEARNING DATA (INITIAL LEARNING DATA)

~111
LEARNING DATA VAE MODEL

~112
EXCESS DETECTION VAE MODEL

LOW ANOMALY SCORE

Fig. 6

IN EVALUATION (EXCESS DETECTION DATA)

CONCATENATED MODEL

111
LEARNING DATA VAE MODEL

112
EXCESS DETECTION VAE MODEL

SMALL AMOUNT OF EXCESS DETECTION DATA

LOW ANOMALY SCORE

Fig. 7

Fig. 8

```
                    ┌─────────────┐
                    │    START    │
                    └──────┬──────┘
                           │           ⌇S1
        ┌──────────────────▼──────────────────┐
        │   INSTRUCT INITIAL MODEL GENERATION  │
        └──────────────────┬──────────────────┘
                           │           ⌇S2
        ┌──────────────────▼──────────────────┐
        │       INPUT INITIAL LEARNING DATA    │
        └──────────────────┬──────────────────┘
                           │           ⌇S3
        ┌──────────────────▼──────────────────┐
        │   GENERATE LEARNING DATA VAE MODEL   │
        └──────────────────┬──────────────────┘
                           │
                    ┌──────▼──────┐
                    │     END     │
                    └─────────────┘
```

Fig. 9

```
                    ┌──────────────┐
                    │    START     │
                    └──────┬───────┘
                           │              ╭S11
                    ┌──────▼──────────────────┐
                    │  INPUT EVALUATION DATA   │
                    └──────┬───────────────────┘
                           │              ╭S12
                    ┌──────▼──────────────────┐
                    │   APPLY LEARNED MODEL    │
                    └──────┬───────────────────┘
                           │              ╭S13
                    ┌──────▼──────────────────┐
                    │  ESTIMATE PROBABILITY    │
                    │       DENSITY            │
                    └──────┬───────────────────┘
                           │              ╭S14
                    ┌──────▼──────────────────┐
                    │      CONCATENATE         │
                    └──────┬───────────────────┘
                           │              ╭S15
                    ┌──────▼──────────────────┐
                    │  OUTPUT EVALUATION RESULT│
                    └──────┬───────────────────┘
                           │              ╭S16
```

INPUT EVALUATION DATA — S11

APPLY LEARNED MODEL — S12

ESTIMATE PROBABILITY DENSITY — S13

CONCATENATE — S14

OUTPUT EVALUATION RESULT — S15

IS EXCESS DETECTION DATA LEARNING INSTRUCTED? — S16

Yes

No

INPUT EXCESS DETECTION DATA — S17

GENERATE EXCESS DETECTION VAE MODEL OR UPDATE — S18

IS EVALUATION ENDED? — S19

No

Yes

END

Fig. 10

Fig. 11

112-2  112-1

| LEARNING DATA VAE MODEL |

Y11

111-2  111-1

| EXCESS DETECTION VAE MODEL |

Y12

Dt

EVALUATION DATA

123

EVALUATION UNIT

Dr'

EVALUATION RESULT

Fig. 12

IN FEEDBACK LEARNING

```
┌─────────────────────────────────────────────┐
│ (1a) LEARNING DATA: PRECISELY LEARNED         │
│ (1b) EXCESS DETECTION DATA: TEND TO BE         │
│            IGNORED IN LEARNING                 │
└─────────────────────────────────────────────┘
```

LARGE AMOUNT OF LEARNING DATA (INITIAL LEARNING DATA)

VAE MODEL

SMALL AMOUNT OF EXCESS DETECTION DATA

Fig. 13

IN EVALUATION (LEARNING DATA)

LARGE AMOUNT OF LEARNING DATA (INITIAL LEARNING DATA) → VAE MODEL → LOW ANOMALY SCORE

Fig. 14

IN EVALUATION (EXCESS DETECTION DATA)

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DIEDERIK P KINGMA ; MAX WELLING.** *Auto-Encoding Variational Bayes,* 07 June 2018, https://arxiv.org/abs/1312.6114

- An Empirical Evaluation of Deep Learning for Network Anomaly Detection. **MALAIYA RITESH K et al.** 2018 INTERNATIONAL CONFERENCE ON COMPUTING, NETWORKING AND COMMUNICATIONS (ICNC). IEEE, 05 March 2018, 893-898